# EUROPÄISCHE PATENTSCHRIFT

(11) **EP 1 329 254 B1**
(45) Veröffentlichungstag und Bekanntmachung des Hinweises auf die Patenterteilung: **13.04.2005**
(21) Anmeldenummer: 02450266.8
(22) Anmeldetag: 22.11.2002
(51) Int. Cl.: B01F 13/02, C12G 1/02

(54) **Vorrichtung und Verfahren zum Mischen von flüssigen, zähflüssigen und/oder rieselfähigen Medien**
Device and process for mixing of liquid, viscous and/or pourable media
Dispositif et procédé de mélanger des milieux liquides, visqueux et/ou coulants

(30) Priorität: 23.11.2001 AT 9112001 U
(43) Veröffentlichungstag der Anmeldung: 23.07.2003
(73) Patentinhaber: Böck, Hermann, 3730 Burgschleinitz 70 (AT)
(72) Erfinder: Böck, Hermann, 3730 Burgschleinitz 70 (AT)
(74) Vertreter: Babeluk, Michael, Dipl.-Ing.

(56) Entgegenhaltungen:
- WO-A-00/61272
- DE-U- 9 106 768
- FR-A- 2 596 768
- US-A- 4 249 828

## Beschreibung

Die Erfindung betrifft eine Vorrichtung zum Mischen von flüssigen, zähflüssigen oder rieselfähigen Medien in einem Behälter, insbesondere zur Maischehutbehandlung bei der Rotweinherstellung, mit zumindest einer zu einem Düsenteil führenden Zuführleitung für ein Gas und einer Steuereinrichtung zur Steuerung der diskontinuierlichen Gaszufuhr zum im Behälter angeordneten Düsenteil, wobei die Position oder die Ausströmrichtung des Düsenteiles in genau definierter Weise im Behälter während des Betriebes vorzugsweise diskontinuierlich veränderbar ist und der Düsenteil im Behälter um eine Drehachse drehbar angeordnet und durch eine Verdreheinrichtung verdrehbar ist, wobei der Düsenteil als Tellerdüse ausgebildet ist.

Es ist bekannt, Flüssigkeiten innerhalb eines Behälters durch pulsartiges Einblasen eines Gases zu durchmischen. Die Düsenteile sind dabei üblicherweise im Bereich des Behälterbodens unveränderbar angeordnet. Insbesondere bei zähflüssigen Medien, wie Maischeanteile bei der Rotweinerzeugung, kann eine homogene Durchmischung nicht erreicht werden, da die aufsteigenden Gasblasen jeweils den gleichen, den geringsten Widerstand entgegensetzenden Weg durch das Medium nehmen. Somit werden immer die selben Bereiche gut durchmischt, während andere Randbereiche nicht von Gasblasen durchsetzt werden.

Aus den Veröffentlichungen FR 2 596 768 A1 und FR 2 596 410 A2 sind Vorrichtungen für die Weinbehandlung bekannt, bei denen Gas über drehbare Düsenteile in die Most eingeblasen wird, um eine Durchmischung der Maischeanteile zu bewirken. Bei den beiden genannten Dokumenten werden im Bodenbereich Rotorblätter mit Düsen über eine Hohlwelle in Drehung versetzt. Die erzielte Durchmischung ist allerdings nicht ausreichend. Außerdem werden durch die Rotorblätter Maischeanteile mechanisch beschädigt.

Die FR 2 797 783 A1 beschreibt einen Mischer mit gerichteter Strahldüse zur Zerteilung eines an der Oberfläche einer Flüssigkeit schwimmenden Substrates, wobei mit einer Strahldüse eine Flüssigkeit auf das Substrat geströmt wird. Um eine ausreichend Durchmischung zu erreichen, wird die Verfahrensflüssigkeit mit hohem Druck auf die Oberfläche aufgebracht. Im Falle der Rotweinherstellung würden die Maischeanteile bei derartiger Behandlung aber stark beschädigt werden.

Die WO 00/61272 A2 offenbart eine Vorrichtung der eingangs genannten Art, wobei die Tellerdüsen jeweils zwei übereinanderliegende, scheibenartige Platten aufweisen, zwischen welchen Gas im Wesentlichen radial in das Medium eingeblasen wird. Es entstehen dabei eine Mehrzahl von aufsteigenden Gasblasen, deren Impuls allerdings kaum ausreicht, um ein Oberflächenschicht aus Maische zu durchbrechen und aufzureißen.

Auch die DE 91 06 768 U1 beschreibt einen Begasungsrührer mit einer Tellerdüse mit zwei übereinander angeordneten Kreisplatten, zwischen welchen Gas radial in das Mischgut eingeblasen wird.

Insbesondere bei der Rotweinerzeugung wirkt sich eine ungenügende Durchmischung der Maischeanteile nachteilig auf die Qualität des Rotweines aus. Der Rotweinmaischekuchen oder Rotweinmaischehut bildet sich an der Oberfläche des Traubensaftes im Behälter. Wird der Rotweinmaischekuchen nicht wieder in den flüssigen Traubensaft rückgeführt, so gehen dem Rotwein wichtige Farb- und Aromastoffe verloren, was sich direkt nachteilig auf die Qualität des Rotweines auswirkt.

Bei der Rückführung der Rotweinmaische werden verschiedene Verfahren eingesetzt. So ist es bekannt, der Maische Saft durch einen Siebzylinder zu entziehen und den Rotweinmaischekuchen an der Oberfläche mit diesem flüssigen Saft zu übergießen oder zu überfluten. Weiters ist es bekannt, die Maische mechanisch zu rühren, um eine gleichmäßige Durchmischung zu erreichen. Die mechanische Durchmischung hat allerdings den Nachteil, dass dabei die Rotweinmaische sehr stark beschädigt wird und dass Beerenfleisch zu einem Brei zerschlagen wird. Dadurch gelangen sehr viele Bitterstoffe in den Rotwein, welche nachträglich mit chemischen Mitteln entfernt werden müssen.

Weiters haben Rührwerke zumeist den Nachteil, dass sehr viele Einbauten im Behälter notwendig sind und dass die Reinigung des Behälters und der einzelnen Teile sehr aufwendig ist.

Aufgabe der Erfindung ist es, diese Nachteile zu vermeiden und auf möglichst einfache Weise eine schonende Durchmischung von flüssigen, zähflüssigen und/oder rieselfähigen Medien in einem Behälter zu erreichen.

Erfindungsgemäß wird dies dadurch erreicht, dass die Tellerdüse eine untere und eine obere tellerartige Düsenschale aufweist, wobei die beiden Düsenschalen voneinander beabstandet sind und wobei zwischen den Düsenschalen ein Düsenraum aufgespannt ist. Dadurch kann eine gleichmäßige Verteilung des Gases und eine besonders schonende Durchmischung des Mediums im Behälter erreicht werden.

Um eine genaue Positionierung und Ausrichtung des Düsenteiles zu ermöglichen, ist vorgesehen, dass der Düsenteil und/oder die Zuführleitung im Bereich des Behälterbodens gelagert ist.

Dadurch, dass der Düsenteil als Tellerdüse ausgebildet ist, ist eine kontrollierte Einströmung des Gases erzielbar. Die Tellerdüse weist eine strömungsgünstige Form auf, sodass die Motor-Getriebe-Einheit relativ klein und leistungsschwach ausgeführt werden kann, was sich günstig auf den Energieverbrauch auswirkt. Außerdem wird das Medium möglichst geringen mechanischen Scherkräften ausgesetzt, was insbesondere bei der Rotweinherstellung von großer Bedeutung ist, um eine zu starke Beschädigung der Rotweinmaische zu vermeiden. Vorzugsweise weist der Düsenteil zumindest eine drallerzeugende Leitfläche auf. Dadurch wird ein sehr großer Anteil der Flüssigkeit durch das Gas benetzt. Die Symmetrieachse des Düsenteiles kann dabei geneigt zur Drehachse ausgebildet sein.

Insbesondere bei großen Behältern ist es sehr vorteilhaft, mehrere Düsenteile im Behälter, vorzugsweise in unterschiedlichen Höhen anzuordnen. Um in jedem Behälterabschnitt eine optimale Durchmischung zu erreichen, ist es besonders vorteilhaft, wenn zumindest zwei Düsenteile oder Gruppen von Düsenteilen getrennt voneinander ansteuerbar sind, wobei vorzugsweise zumindest zwei Düsenteile oder Gruppen von Düsenteilen mit jeweils einer Zuführleitung strömungsverbunden sind. In einer besonders bevorzugten Ausführungsvariante der Erfindung ist dabei vorgesehen, dass die Zuführleitung zumindest zweier Düsenteile parallel nebeneinander angeordnet sind. Alternativ dazu können die Zuführleitungen zumindest zweier Düsenteile koaxial zueinander angeordnet sein, wobei zwischen zwei benachbarten Zuführleitungen jeweils ein Ringspalt ausgebildet ist, welcher einerseits mit einem Düsenteil und andererseits mit einer eigenen Gasversorgungseinrichtung strömungsverbunden ist. Jede Zuführleitung kann in diesem Fall für sich und unabhängig durch eine Verdreheinrichtung verdrehbar ausgeführt sein. Konstruktiv einfacher ist es aber, wenn die Zuführleitungen starr miteinander verbunden und alle Zuführleitungen gemeinsam um die Drehachse verdrehbar angeordnet sind. Sind zumindest zwei Zuführleitungen oder zumindest zwei Gruppen von Zuführleitungen vorgesehen, kann jede Zuführleitung oder jede Gruppe von Zuführleitungen mit jeweils einer stillstehenden Versorgungsleitung strömungsverbunden sein. In einer Ausführungsvariante, in welcher die Strömungsverbindung zwischen einer starren Versorgungsleitung und einer drehbaren Zuführleitung über einen Verbindungsteil erfolgt, ist vorgesehen, dass der Verbindungsteil pro Versorgungsleitung eine Kammer aufweist, von welcher zumindest eine Zuführleitung ausgeht, wobei die Kammern unterschiedlicher Versorgungsleitungen durch im Wesentlichen scheibenförmige Trennwände begrenzt und/oder gasdicht voneinander getrennt sind. In einer konstruktiv einfachen und zuverlässigen Ausbildung der Erfindung ist vorgesehen, dass die Trennwände parallel und mit Abstand zueinander und normal zur Drehachse im im Wesentlichen hohlzylindrischen Gehäuse des Verbindungsteiles drehbar angeordnet sind, wobei vorzugsweise zwischen Trennwand und Gehäuse jeweils ein Dichtmittel vorgesehen ist, wobei vorzugsweise die Trennwände starr mit einer Antriebswelle verbunden sind. Besonders platzsparend ist es, wenn die Antriebswelle hohl ausgeführt ist und eine zentrale Zuführleitung ausbildet, welche mit einer Kammer, vorzugsweise mit der von den Düsenteilen entferntesten Kammer, über zumindest eine radiale Eintrittsöffnung strömungsverbunden ist, wobei vorzugsweise zumindest eine Trennwand zumindest eine von der Drehachse beabstandete axiale Einlauföffnung für eine Zuführleitung aufweist.

Im Rahmen der Erfindung kann weiters vorgesehen sein, dass der Behälterdeckel eine Entlüftungsöffnung aufweist, welche mit der Saugseite einer Druckerzeugungsvorrichtung der Gasversorgungseinrichtung strömungsverbunden ist.

Als Gas kann Stickoxid, Kohlendioxid oder normale Atemluft verwendet werden. Wird die Erfindung zur Maischehutbehandlung bei der Rotweinherstellung verwendet, so kann als einzublasendes Gas normale kohlegefilterte Luft (Atemluft) verwendet werden. Die Oxidation des Rotweinsaftes mit dem Luftsauerstoff wirkt sich vorteilhaft auf die Qualität des Rotweines aus.

Die Erfindung wird im Folgenden anhand der Figuren näher erläutert. Es zeigen
- Fig. 1: und Fig. 2 Behälter mit erfindungsgemäßen Vorrichtungen in einer ersten und einer zweiten Ausführungsvariante,
- Fig. 3: einen Behälter mit der erfindungsgemäßen Vorrichtung in einer Draufsicht auf den Behälterdeckel,
- Fig. 4: einen Düsenteil in einem Längsschnitt,
- Fig. 5: einen Düsenteil in einer Draufsicht,
- Fig. 6: Düsenteile in einer weiteren Ausführungsvariante der Erfindung in einem Längsschnitt,
- Fig. 7: einen Schnitt durch die Zuführleitungen gemäß der Linie VII-VII in Fig. 6,
- Fig. 8: eine erfindungsgemäße Vorrichtung in einer einfachen Ausführungsvariante,
- Fig. 9: einen Behälter mit einer erfindungsgemäßen Vorrichtung in einer weiteren Ausführungsvariante,
- Fig. 10: einen Verbindungsteil im Detail in einer Ausführungsform,
- Fig. 11: einen Verbindungsteil im Längsschnitt als Detail XI in Fig. 9 in einer anderen Ausführungsform und
- Fig. 12: diesen Verbindungsteil im Schnitt gemäß der Linie XII-XII in Fig. 11.

Funktionsgleiche Teile sind in den Ausführungsvarianten mit gleichen Bezugszeichen versehen.

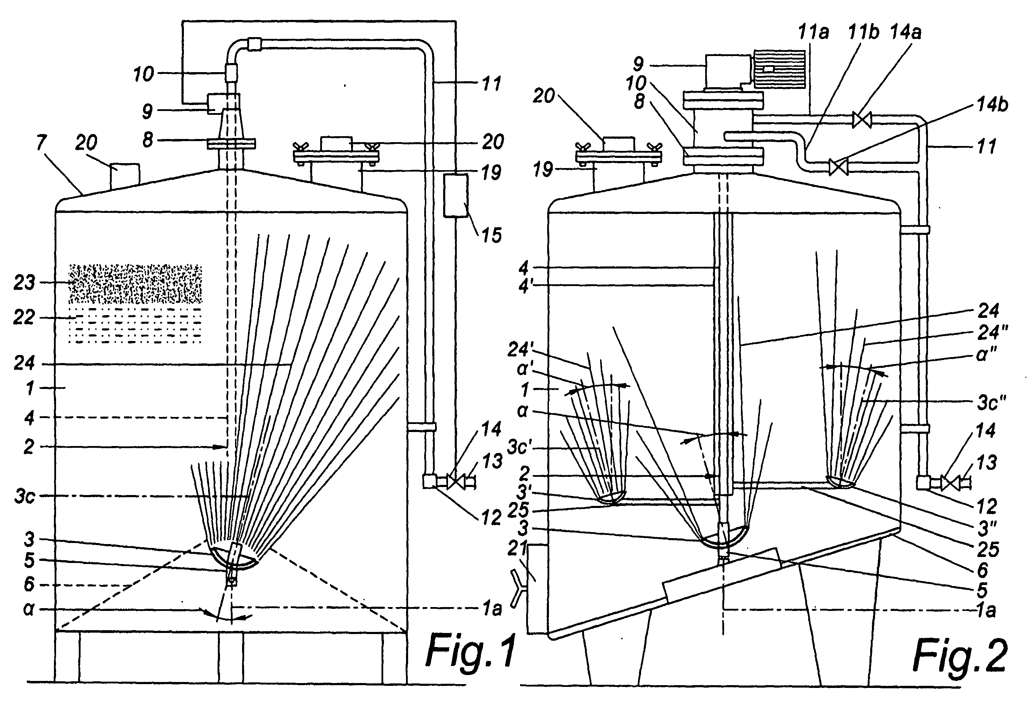

In einem Behälter 1 zur Rotweinherstellung ist eine Vorrichtung 2 zum Mischen von flüssigen und zähflüssigen Medien, im konkreten Fall Traubensaft und Maische, angeordnet. Die in Fig. 1 dargestellte Vorrichtung 2 besteht aus mindestens einem Düsenteil 3 welcher starr mit einer Zuführleitung 4 verbunden ist. Düsenteil 3 und Zuführleitung 4 sind drehbar in einem Lager 5 am Behälterboden 6 gelagert. Die Zuführleitung 4 ist durch den Behälterdeckel 7 des Behälters 1 geführt und tritt im Bereich eines Motorflansches 8 in den Behälterdeckel 7 ein. Am Motorflansch 8 ist eine langsam laufende Motor-Getriebe-Einheit 9 befestigt, mit welcher die Zuführleitung 4 samt dem Düsenteil 3 geringfügig verdreht werden kann. Die um die Drehachse 1a drehbare Zuführleitung 4 ist über einen gasdichten Verbindungsteil 10 mit einer feststehenden Versorgungsleitung 11 verbunden, welche über eine weitere Kupplung 12 mit einer nicht weiter dargestellten Gasversorgungseinrichtung 13 strömungsverbunden ist. Zur Steuerung der zugeführten Gasmenge ist ein Steuerventil 14 vorgesehen, welches über eine Steuereinheit 15 gesteuert werden kann. Mit der Steuereinheit 15 ist auch die durch eine Motor-Getriebe-Einheit 9 gebildete Verdreheinrichtung für die Düsenteile 3 verbunden.

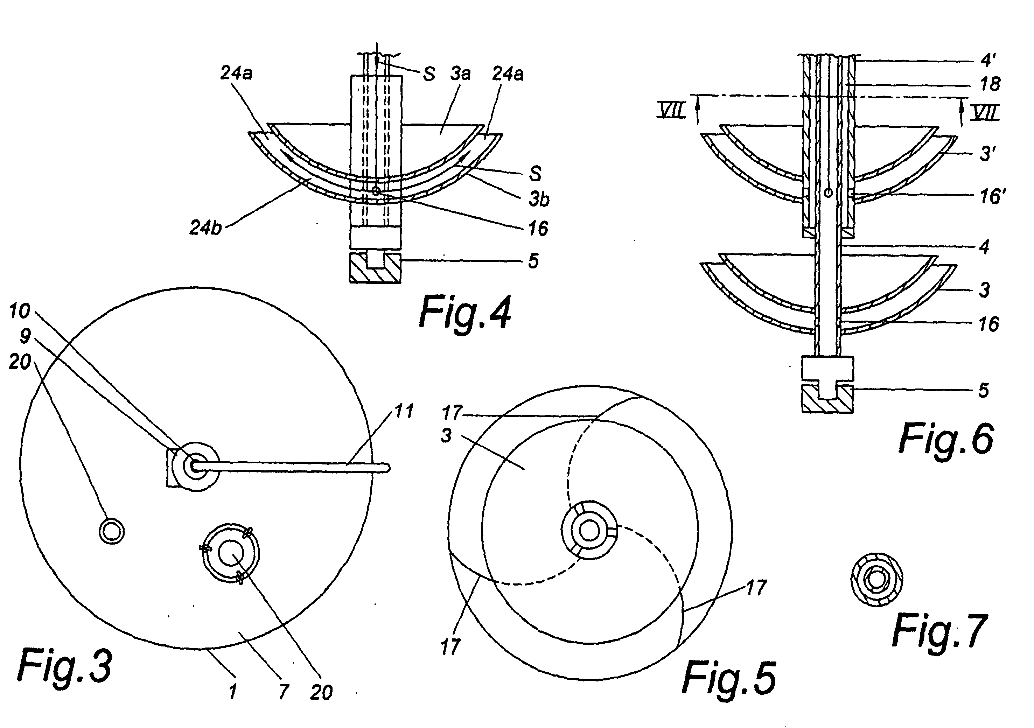

Der um die Drehachse 1a drehbare Düsenteil 3 ist im Wesentlichen als Tellerdüse ausgebildet und besteht aus zwei tellerartigen Düsenschalen 3a, 3b, die einen Düsenraum aufspannen, in welchen durch Öffnungen 16 in der Zuführleitung 4 Gas einströmt, wie insbesondere in Fig. 4 erkennbar ist. Die Gasströmung ist durch die Pfeile S angedeutet. Die Hochachse bzw. Symmetrieachse 3c des Düsenteiles 3 kann gegenüber der Zuführleitung 4 bzw. gegenüber der Drehachse 1a um einen Winkel α>0 geneigt angeordnet sein. Die Schrägstellung des Düsenteiles 3, welcher an der Zuführleitung 4 angebracht sind, wird nach der Bauart des Behälters 1 berechnet und montiert. Der Düsenteil 3 ist so konstruiert, dass eine möglichst große Gasblase in die Flüssigkeit eingebracht wird.

Der Düsenteil 3 weist dabei spiralförmige Leitflächen 17 auf, um dem eingebiasenen Gas eine Drallströmung aufzuprägen. Durch die Tellerdüse sollen die Gasblasen möglichst weit verteilt werden. Die Ausströmöffnungen 24a des Düsenteiles 3 sind dazu im Wesentlichen nach oben gerichtet. Zuführleitung 4 und Düsenteil 3 sind im Bereich der Behälterhochachse 1a angeordnet.

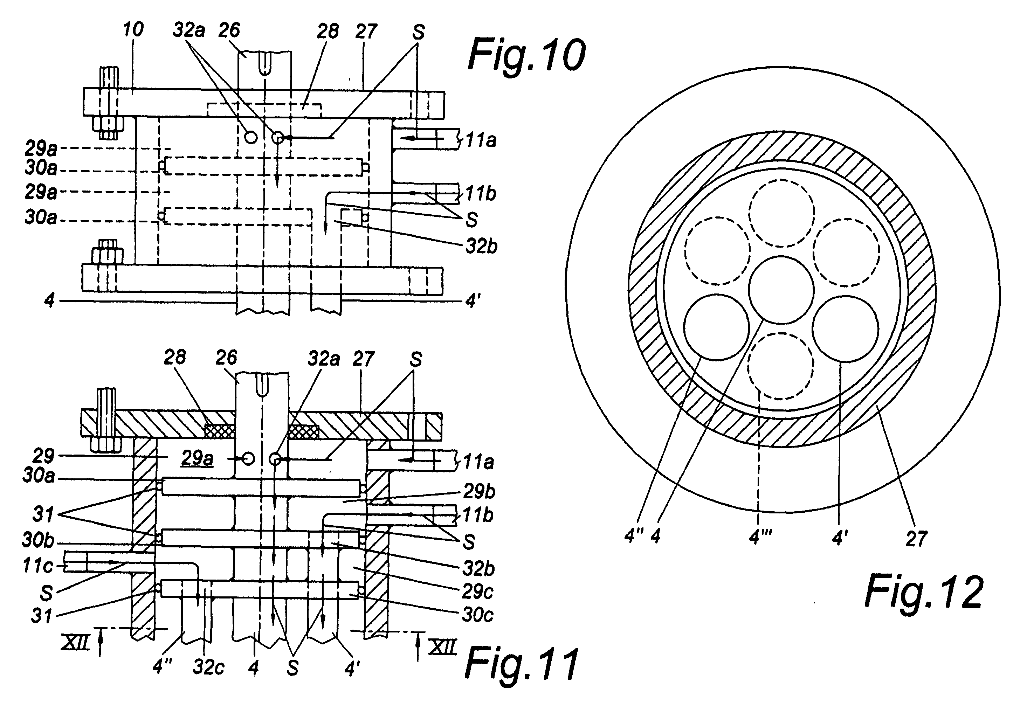

Bei der in Fig. 2 dargestellten Ausführungsvariante sind mehrere Düsenteile 3, 3', 3" vorgesehen. Der Düsenteil 3 ist dabei zentral im Bereich der Drehachse 1a angeordnet. Die weiteren Düsenteile 3', 3" sind auf um die Drehachse 1a drehbaren Tragarmen 25 befestigt. Dadurch, dass die Düsenteile 3, 3', 3" in unterschiedlichen Entfernungen zur Drehachse 1a angeordnet sind, werden alle Bereiche der Maischeschicht 23 erfasst. Die Düsenteile 3, 3', 3" werden durch voneinander unabhängige Zuführleitungen 4, 4', mit Gas gespeist, wobei die Zuführleitungen 4, 4' von einem Versorgungsteil 10 ausgehen. In separaten, mit den Zuführleitungen 4, 4' in Verbindung stehenden Kammern 29a, 29b (Fig. 10 und 11) des Versorgungsteiles 10 münden jeweils einzelne Versorgungsleitungen 11a, 11b ein. In jeder einzelnen Versorgungsleitung 11a, 11b ist ein Steuerventil 14a, 14b zur Steuerung der Gasmengen zu den Düsenteilen 3, 3', 3" vorgesehen. Die Symmetrieachsen 3c, 3c' können unter Winkeln α, α', α" geneigt bezüglich der Drehachse 1a angeordnet sein, wodurch eine bessere Verteilung der im Saft 22 aufsteigenden Gasblasen erreicht werden kann.

Die Fig. 6 und 7 zeigen eine Ausführungsvariante mit zwei Düsenteilen 3, 3', wobei jeder Düsenteil 3, 3' mit einer eigenen Zuführleitung 4, 4' fest verbunden ist. Die beiden Zuführleitungen 4, 4' sind dabei konzentrisch zueinander angeordnet, wobei zwischen den beiden Zuführleitungen 4, 4' ein Ringspalt 18 ausgebildet ist, in welchem das Gas für den oberen Düsenteil 3' zugeführt wird und durch die Zuführöffnungen 16' in den Düsenteil 3' strömt. Wesentlich ist, dass die Zuführleitungen 4, 4' und damit die entsprechenden Düsenteile 3, 3' unabhängig voneinander verdreht werden können. Die Zuführleitung 4' steht somit mit einer - nicht weiter dargestellten - eigenen Verdreheinrichtung in Verbindung. Die jedem Düsenteil 3, 3' zugeführte Gasmenge, sowie der Zeitpunkt des Einblasens der Gasmenge kann individuell und unabhängig voneinander gesteuert werden. Dies bedingt, dass für jeden Düsenteil 3, 3' eine eigene Gasversorgungseinrichtung, zumindest eine eigene Versorgungsleitung mit Steuerventil vorgesehen ist.

In den Fig. 1 bis 3 ist mit Bezugszeichen 19 ein Kontrolldeckel bezeichnet. Über Entlüftungsrohre 20 verlässt das Gas den Behälter 1. Bezugzeichen 21 deutet die Entleerungsöffnung des Behälters 1 an.

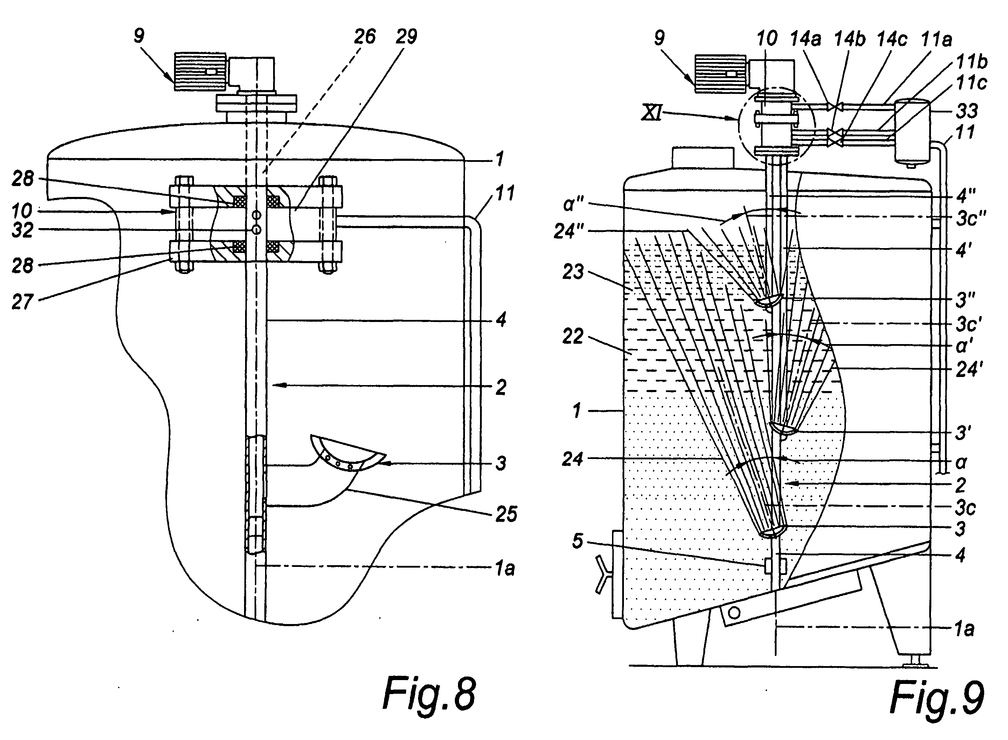

Fig. 8 zeigt eine in einen Behälter 1 eingebaute Vorrichtung 2 mit einer über eine Motor-Getriebe-Einheit 9 verdrehbaren Zuführleitung 4. An der Zuführleitung 4 ist ein einen Düsenteil 3 aufnehmender Tragarm 25 angeordnet. Das Gas wird über eine Versorgungsleitung 11 einer Zuführleitung 4 zugeführt, wobei zwischen der Versorgungsleitung 11 und der Zuführleitung 4 ein Verbindungsteil 10 vorgesehen ist. Der Verbindungsteil 10 ist im konkreten Fall innerhalb des Behälters 1 angeordnet, er kann aber genauso gut außerhalb des Behälters positioniert sein. Er hat die Aufgabe, das Gas der Versorgungsleitung 11 der drehbaren Zuführleitung 4 ohne Gasverluste zuzuführen.

Die Zuführleitung 4 bildet zugleich eine hohl ausgeführte Antriebswelle 26 der Motor-Getriebe-Einheit 9 aus, welche den Verbindungsteil 10 axial durchsetzt. Zwischen der Antriebswelle 26 bzw. dem Zuführteil 4 und dem Gehäuse 27 des Verbindungsteiles 10 ist jeweils ein Dichtmittel 28 angeordnet, um Gasleckagen zu vermeiden. Das Gehäuse 27 bildet im Inneren einen Hohlraum 29 aus, in welchen die Versorgungsleitung 11 einmündet, und welche die Zuführleitung 4 umgibt. Im Bereich des Hohlraumes 29 weist die Zuführleitung 4 eine oder mehrere radiale Bohrungen 32 auf, durch welche das Gas aus der Versorgungsleitung 11 in die Zuführleitung 4 einströmen kann.

Fig. 9 zeigt ein weiteres Ausführungsbeispiel einer in einen Behälter 1 eingebauten Vorrichtung 2 zum Mischen von flüssigen, zähflüssigen oder rieselfähigen Medien mit mehreren Düsenteilen 3, 3', 3". Zu jedem Düsenteil 3, 3', 3" führt jeweils eine Zuführleitung 4, 4', 4". Zum Unterschied zu der in Fig. 6 abgebildeten Ausführung, sind bei der in Fig. 9 dargestellten Ausführung die Zuführleitungen 4, 4', 4" nicht konzentrisch zueinander, sondern nebeneinander angeordnet und gemeinsam durch die Motor-Getriebe-Einheit 9 um die Drehachse 1a drehbar. Über einen Verbindungsteil 10 wird das Gas aus der Versorgungsleitung 11 den Zuführleitungen 4, 4', 4" zugeführt. Zwischen dem Gasspeicher und den Versorgungsleitungen 11a, 11b, 11c sind Steuerventile 14a, 14b, 14c angeordnet. Diese können manuell oder - durch eine Steuereinheit 15 - automatisch betätigbar sein. Im letzteren Fall können die Steuerventile 14a, 14b, 14c als Magnetventile ausgeführt sein.

Wie in den Fig. 10 bis 12 dargestellt ist, besteht der Verbindungsteil 10 aus einem einen im Wesentlichen zylindrischen Hohlraum 29 bildenden Gehäuse 27, in welche Versorgungsleitungen 11a, 11b, 11c in verschiedenen Abschnitten einmünden. Jede der Versorgungsleitungen 11a, 11b, 11c ist separat ansteuerbar. Die Versorgungsleitungen 11a, 11b, 11c gehen von einem gemeinsamen Gasspeicher 33 aus, in welchen eine gemeinsame Versorgungsleitung 11 einmündet. Jede der Versorgungsleitungen 11a, 11b, 11c weist ein Steuerventil auf.

Wie den Fig. 10 und 11 zu entnehmen ist, durchsetzt die hohl ausgeführte Antriebswelle 26, welche mit der Motor-Getriebe-Einheit 9 verbunden ist, das Gehäuse 27 und ist gegenüber dem Gehäuse 27 über ein Dichtmittel 28 abgedichtet. Die Antriebswelle 26 kann zugleich eine mittige Zuführleitung 4 für ein Düsenteil 3 ausbilden. Fig. 10 zeigt eine Ausführung mit zwei Zuführleitungen 4, 4' und Fig. 11 mit drei Zuführleitungen 4, 4', 4". An der Antriebswelle 26 ist pro Zuführleitung 4, 4', 4" eine Wandscheibe 30a, 30b, 30c in Abstand voneinander angeordnet. Die Wandscheiben 30a, 30b, 30c unterteilen den Hohlraum 29 in Kammern 29a, 29b, 29c. In jede der Kammern 29a, 29b, 29c mündet eine Versorgungsleitung 11a, 11b, 11c radial ein. Die Wandscheiben 30a, 30b, 30c sind gegenüber dem Gehäuse 27 durch Dichtungsringe 31 abgedichtet. Jede Kammer 29a, 29b, 29c steht über zumindest eine Öffnung 32a, 32b, 32c mit einer Zuführleitung 4, 4', 4" in Strömungsverbindung, wobei die Öffnungen 32b, 32c der Wandscheiben 30b, 30c die Enden der Zuführleitungen 4', 4" aufnehmen. Die Zuführleitung 4 ist über radiale Öffnungen 32a mit der Kammer 29a verbunden. Sämtliche Zuführleitungen 4, 4', 4" sind über die Wandscheiben 30a, 30b, 30c miteinander verbunden und können durch die Antriebswelle 26 gemeinsam verdreht werden. Auf diese Weise kann eine Vielzahl von verdrehbaren Zuführleitungen 4, 4', 4" über jeweils eine eigene Versorgungsleitung 11 angespeist werden. In Fig. 12 sind Anordnungen von weiteren Zuführleitungen 4"' mir strichlierten Linien angedeutet.

Das Gas strömt aus der gemeinsamen Versorgungsleitung 11 in den Gasspeicher 33 und gelangt von dort über die Versorgungsleitungen 11a, 11b, 11c in die Kammer 29a, 29b, 29c des Verbindungsteiles 10 und strömt weiter über die Zuführleitungen 4, 4', 4" zu den Düsenteilen 3, 3', 3". Analog zu dem in Fig. 1 dargestellten Ausführungsbeispiel, können auch bei mehreren Düsenteilen 3, 3', 3" diese jeweils geneigt zur Zuführleitung 4, 4', 4" angeordnet sein, wobei zwischen der Symmetrieachse 3c, 3c', 3c" und der Drehachse 1a jeweils ein Winkel α, α', α">0 ausgebildet ist. Dadurch lässt sich eine besonders gute Durchmischung des Behälterinhaltes erreichen.

Während der Rotweinproduktion entsteht im Behälter 1 an der Oberfläche des flüssigen Saftes 22 ein Rotweinmaischehut 23, welcher für das weitere Verfahren nicht mehr zur Verfügung stehen würde, wenn keine Vermischung durchgeführt wird. Um die Maische 23 wieder mit dem flüssigen Saft 22 zu mischen, wird in genau definierten Zeitabständen über die Vorrichtung 2 Gas in den Behälter 1 eingeblasen, welches durch den Düsenteil 3, 3', 3" in den Saft 22 eintritt, wie in Fig. 9 mit Bezugszeichen 24, 24', 24" angedeutet ist. Die aufsteigenden Gasblasen zerstören die Maischeschicht 23 an der Oberfläche und erzeugen eine hervorragende Durchmischung mit dem Saft 22, ohne den Beerenanteil zu beschädigen. In genau definierten Zeitabschnitten wird die Zuführleitung 4 samt dem Düsenteil 3 um einen definierten Winkel weitergedreht, um in folgenden Einblasevorgängen den gesamten Rotweinmaischekuchen 23 mit dem Saft 22 zu vermischen. Auf diese Weise wird die gesamte Maische wieder in den Prozess rückgeführt.

Als Gas kann kohlegefilterte Atemluft, Kohlensäure, Stickstoff oder andere im Lebensmittelbereich zugelassene Treibmittel verwendet werden. Das Gas wird dabei beispielsweise unter einem Druck von 2 bis 4 bar zugeführt.

Alternativ zur Verstellung der Düsenteile 3, 3', 3" mittels der Motor-Getriebe-Einheit 9 ist auch eine manuelle Verdrehung denkbar.

Durch die Einblaseereignisse, welche beliebig oft durchgeführt werden können, wird das zu mischende Medium abgesprengt. Durch das Hochreißen der Gasblase, welche auch relativ viel Flüssigkeit nach oben mitnimmt, stürzt das obere, eher leichtere Medium nach unten ab.

Die über die Entlüftungsrohre 12 dem Behälter 1 entweichenden Gase können ansaugseitig der Gasversorgungseinrichtung 13 wieder zugeführt werden.

## Patentansprüche

1. Vorrichtung (2) zum Mischen von flüssigen, zähflüssigen oder rieselfähigen Medien in einem Behälter (1), insbesondere zur Maischehutbehandlung bei der Rotweinherstellung, mit zumindest einer zu einem Düsenteil (3, 3') führenden Zuführleitung (4, 4', 4") für ein Gas und einer Steuereinrichtung (15) zur Steuerung der diskontinuierlichen Gaszufuhr zum im Behälter (1) angeordneten Düsenteil (3, 3'), wobei die Position oder die Ausströmrichtung des Düsenteiles (3, 3') in genau definierter Weise im Behälter (1) während des Betriebes vorzugsweise diskontinuierlich veränderbar ist und der Düsenteil (3, 3') im Behälter (1) um eine Drehachse (1a) drehbar angeordnet und durch eine Verdreheinrichtung verdrehbar ist, wobei der Düsenteil (3, 3') als Tellerdüse ausgebildet ist, **dadurch gekennzeichnet, dass** die Tellerdüse eine untere und eine obere tellerartige Düsenschale (3a, 3b) aufweist, wobei die beiden Düsenschalen (3a, 3b) voneinander beabstandet sind und wobei zwischen den Düsenschalen (3a, 3b) ein Düsenraum (24b) aufgespannt ist.

2. Vorrichtung (2) nach Anspruch 1, **dadurch gekennzeichnet, dass** zumindest ein Düsenteil (3) und/oder zumindest eine Zuführleitung (4) im Bereich des Behälterbodens (6) gelagert ist.

3. Vorrichtung (2) nach Anspruch 1 oder 2, **dadurch gekennzeichnet, dass** mehrere Düsenteile (3, 3') in unterschiedlichen Höhen und/oder in unterschiedlichen Entfernungen zur Drehachse (1a) angeordnet sind.

4. Vorrichtung nach einem der Ansprüche 1 bis 3, **dadurch gekennzeichnet, dass** zumindest ein Düsenteil (3) zumindest eine drallerzeugende Leitfläche (17) aufweist.

5. Vorrichtung nach einem der Ansprüche 1 bis 4, **dadurch gekennzeichnet, dass** jede Düsenschale (3a, 3b) die Form einer Kugelkalotte aufweist.

6. Vorrichtung nach einem der Ansprüche 1 bis 5, **dadurch gekennzeichnet, dass** die Symmetrieachse (3c) der Tellerdüse geneigt zur Drehachse (1a) angeordnet ist.

7. Vorrichtung (2) nach einem der Ansprüche 1 bis 6, **dadurch gekennzeichnet, dass** zumindest zwei Düsenteile (3, 3') oder Gruppen von Düsenteilen (3, 3') getrennt voneinander ansteuerbar sind, wobei vorzugsweise zumindest zwei Düsenteile (3, 3') oder Gruppen von Düsenteilen (3, 3') mit jeweils einer Zuführleitung (4, 4', 4") strömungsverbunden sind.

8. Vorrichtung nach Anspruch 7, **dadurch gekennzeichnet, dass** die Zuführleitungen (4, 4', 4") zumindest zweier Düsenteile (3, 3') parallel nebeneinander angeordnet sind.

9. Vorrichtung (2) nach Anspruch 7, **dadurch gekennzeichnet, dass** die Zuführleitungen (4, 4') zumindest zweier Düsenteile (3, 3') koaxial zueinander angeordnet sind, wobei zwischen zwei benachbarten Zuführleitungen (4, 4') jeweils ein Ringspalt (18) ausgebildet ist, welcher einerseits mit einem Düsenteil (3') und andererseits mit einer eigenen Gasversorgungseinrichtung strömungsverbunden ist.

10. Vorrichtung nach einem der Ansprüche 7 bis 9, **dadurch gekennzeichnet, dass** die Zuführleitungen (4, 4', 4") starr miteinander verbunden und alle Zuführleitungen gemeinsam um die Drehachse (1a) verdrehbar angeordnet sind.

11. Vorrichtung (2) nach Anspruch 7 oder 9, **dadurch gekennzeichnet, dass** jede Zuführleitung (4, 4', 4") für sich und unabhängig durch eine Verdreheinrichtung verdrehbar ist.

12. Vorrichtung nach einem der Ansprüche 1 bis 11, **dadurch gekennzeichnet, dass** zumindest zwei Zuführleitungen (4, 4', 4") oder zumindest zwei Gruppen von Zuführleitungen (4, 4', 4") vorgesehen sind, wobei jede Zuführleitung (4, 4', 4") oder jede Gruppe von Zuführleitungen (4, 4', 4") mit jeweils einer stillstehenden Versorgungsleitung (11) strömungsverbunden ist.

13. Vorrichtung nach Anspruch 12, **dadurch gekennzeichnet, dass** zur Strömungsverbindung der Versorgungsleitung (11) mit zumindest einer Zuführleitung (4, 4', 4") zumindest ein Verbindungsteil (10) vorgesehen ist, wobei die Versorgungsleitung (11) vorzugsweise radial in den Verbindungsteil (10) einmündet und die Zuführleitung (4, 4', 4") axial vom Verbindungsteil (10) ausgeht, und wobei die Zuführleitung (4, 4', 4") bezüglich des Gehäuses (27) des Verbindungsteiles (10) drehbar angeordnet und über ein Dichtmittel (28) abgedichtet ist.

14. Vorrichtung nach Anspruch 13, **dadurch gekennzeichnet, dass** der Verbindungsteil (10) pro Versorgungsleitung (11) eine Kammer (29a, 29b, 29c) aufweist, von welcher zumindest eine Zuführleitung (4, 4', 4") ausgeht, wobei die Kammern (29a, 29b, 29c) unterschiedlicher Versorgungsleitungen (11a, 11b, 11c) durch im Wesentlichen scheibenförmige Trennwände (30a, 30b, 30c) begrenzt und/oder gasdicht voneinander getrennt sind.

15. Vorrichtung nach Anspruch 14, **dadurch gekennzeichnet, dass** die Trennwände (30a, 30b, 30c) parallel und mit Abstand zueinander und normal zur Drehachse (1a) im im Wesentlichen hohlzylindrischen Gehäuse (27) des Verbindungsteiles (10) drehbar angeordnet sind, wobei vorzugsweise zwischen Trennwand (30a, 30b, 30c) und Gehäuse (27) jeweils ein Dichtmittel (28) vorgesehen ist.

16. Vorrichtung nach Anspruch 14 oder 15, **dadurch gekennzeichnet, dass** die Trennwände (30a, 30b, 30c) starr mit einer Antriebswelle (26) verbunden sind.

17. Vorrichtung nach einem der Ansprüche 14 bis 16, **dadurch gekennzeichnet, dass** die Antriebswelle (26) hohl ausgeführt ist und eine zentrale Zuführleitung (4) ausbildet, welche mit einer Kammer (29a), vorzugsweise mit der von den Düsenteilen (3) entferntesten Kammer, über zumindest eine radiale Eintrittsöffnung (32a) strömungsverbunden ist.

18. Vorrichtung nach einem der Ansprüche 14 bis 17, **dadurch gekennzeichnet, dass** zumindest eine Trennwand (30a, 30b) zumindest eine von der Drehachse (1a) beabstandete axiale Einlauföffnung (32a, 32b) für eine Zuführleitung (4, 4', 4") aufweist.

19. Vorrichtung (2) nach einem der Ansprüche 1 bis 18, **dadurch gekennzeichnet, dass** der Behälterdeckel (7) zumindest eine Entlüftungsöffnung (20) aufweist, welche mit der Saugseite einer Druckerzeugungsvorrichtung der Gasversorgungseinrichtung (13) strömungsverbunden ist.

20. Verfahren zum Mischen von flüssigen, zähflüssigen und oder rieselfähigen Medien in einem Behälter (1), insbesondere zur Maischebehandlung für die Rotweinherstellung, wobei ein Gas diskontinuierlich in das Medium über zumindest einen Düsenteil (3, 3') eingeblasen wird und durch das im Medium durch den Dichteunterschied aufsteigende Gas das Medium umgewälzt wird, wobei die Position oder die Ausströmrichtung des Düsenteiles (3, 3') in genau definierter Weise im Behälter verändert wird, wobei der Düsenteil (3, 3') in definierten Zeitintervallen diskontinuierlich verdreht wird, wobei vorzugsweise die Verdrehung des Düsenteiles (3, 3') durch Verdrehen der Zuführleitung (4, 4', 4") erfolgt **dadurch gekennzeichnet, dass** dem aus dem Düsenteil (3, 3') ausströmenden Gas eine Drallbewegung aufgeprägt wird.

21. Verfahren nach Anspruch 20, **dadurch gekennzeichnet, dass** das Gas in das Medium in unterschiedlichen Höhen und/oder Behälterabschnitten eingeblasen wird.

## Claims

1. A device (2) for mixing liquid, viscous or granular media in a container (1), more specifically for treating the floating cap of pulp and skins in the red wine making process, with at least one gas feed line (4, 4', 4") leading into a nozzle part (3, 3') and with a control device (15) for controlling the discontinuous supply of gas to the nozzle part (3, 3') disposed within the container (1), with the position or the outflow direction of the nozzle part (3, 3') in the container (1) being preferably discontinuously variable during operation in a precisely defined manner and the nozzle part (3, 3') being disposed within the container (1) so as to be rotatable by a rotator device about an axis of rotation (1a), the nozzle part (3, 3') being configured to be a plate nozzle, **characterized in that** the plate nozzle comprises a lower and an upper plate-like nozzle shell (3a, 3b) with the two nozzle shells (3a, 3b) being spaced apart and a nozzle space (24b) being provided between the nozzle shells (3a, 3b).

2. The device (2) according to claim 1, **characterized in that** at least one nozzle part (3) and/or at least one feed line (4) is laid in the region of the bottom (6) of the container.

3. The device (2) according to claim 1 or 2, **characterized in that** a plurality of nozzle parts (3, 3') are disposed at different heights and/or at different distances from the axis of rotation (1a).

4. The device according to any of the claims 1 to 3, **characterized in that** at least one nozzle part (3) comprises at least one swirl-generating baffle (17).

5. The device according to any of the claims 1 to 4, **characterized in that** each nozzle shell (3a, 3b) is formed in the shape of a spherical calotte.

6. The device according to any of the claims 1 to 5, **characterized in that** the axis of symmetry (3c) of the plate nozzle is disposed so as to be inclined relative to the axis of rotation (1a).

7. The device (2) according to any of the claims 1 to 6, **characterized in that** at least two nozzle parts (3, 3') or groups of nozzle parts (3, 3') are actuatable separately from one another, preferably at least two nozzle parts (3, 3') or groups of nozzle parts (3, 3') being in fluid communication with at least one feed line (4, 4', 4") each.

8. The device according to claim 7, **characterized in that** the feed lines (4, 4', 4") of at least two nozzle parts (3, 3') are disposed in parallel beside each other.

9. The device (2) according to claim 7, **characterized in that** the feed lines (4, 4') of at least two nozzle parts (3, 3') are disposed in a coaxially aligned relationship, with an annular gap (18) being respectively formed between two neighbouring feed lines (4, 4'), said annular gap being in fluid communication with one nozzle part (3') on the one side and with a gas supply device of its own on the other side.

10. The device according to any of the claims 7 to 9, **characterized in that** the feed lines (4, 4', 4") are rigidly connected to each other and that all of the feed lines are disposed so as to be jointly rotatable about the axis of rotation (1a).

11. The device (2) according to claim 7 or 9, **characterized in that** each feed line (4, 4', 4") is rotatable individually and independently by a rotator device.

12. The device according to any of the claims 1 to 11, **characterized in that** at least two feed lines (4, 4', 4") or at least two groups of feed lines (4, 4', 4") are provided, each feed line (4, 4', 4") or each group of feed lines (4, 4', 4") being in fluid communication with a respective stationary supply line (11).

13. The device according to claim 12, **characterized in that** at least one connecting part (10) is provided for establishing a fluid communication between the supply line (11) and at least one feed line (4, 4', 4"), the supply line (11) discharging preferably radially into the connecting part (10) and the feed line (4, 4', 4") taking axially departure from the connecting part (10), and the feed line (4, 4', 4") being disposed so as to be rotatable with respect to the housing (27) of the connecting part (10) and is sealed with a sealant (28).

14. The device according to claim 13, **characterized in that** the connecting part (10) has one chamber (29a, 29b, 29c) for each supply line (11), at least one feed line (4, 4', 4") taking departure from said chamber, the chambers (29a, 29b, 29c) of different supply lines (11a, 11b, 11c) being bounded and/or gas-tightly sealed against each other by substantially disc-shaped partition walls (30a, 30b, 30c).

15. The device according to claim 14, **characterized in that** the partition walls (30a, 30b, 30c) are rotatably disposed in a parallel, spaced-apart relationship normal to the axis of rotation (1a) within the substantially hollow cylindrical housing (27) of the connecting part (10), one sealant (28) being preferably provided between each partition wall (30a, 30b, 30c) and the housing (27).

16. The device according to claim 14 or 15, **characterized in that** the partition walls (30a, 30b, 30c) are rigidly connected to a drive shaft (26).

17. The device according to one of the claims 14 to 16, **characterized in that** the drive shaft (26) is configured to be hollow and forms a central feed line (4) that is in fluid communication with a chamber (29a), preferably with the chamber farthest from the nozzle parts (3), through at least one radial entrance port (32a).

18. The device according to one of the claims 14 to 17, **characterized in that** at least one partition wall (30a, 30b) comprises at least one axial entrance port (32,a, 32b), which is spaced from the axis of rotation (1a), for a feed line (4, 4', 4").

19. The device (2) according to one of the claims 1 to 18, **characterized in that** the cover (7) of the container comprises at least one vent port (20) that is in fluid communication with the suction side of a pressure generating device of the gas supply device (13).

20. A method of mixing liquid, viscous and/or granular media in a container (1), more specifically for treating the floating pulp and skins in the red wine making process, a gas being discontinuously blown into the medium through at least one nozzle part (3, 3') and the medium being circulated by the gas rising in the medium as a result of the difference in density, with the position or outflow direction of the nozzle part (3, 3') in the container being varied during operation in a precisely defined manner, the nozzle part (3, 3') being rotated discontinuously in defined time intervals, the nozzle part (3, 3') being preferably caused to rotate by rotating the feed line (4, 4', 4"), **characterized in that** a swirling motion is imparted to the gas flowing out of the nozzle part (3, 3').

21. The method of claim 20, **characterized in that** the gas is blown into the medium at different heights and/or in different container portions.

## Revendications

1. Dispositif (2) pour mélanger des milieux liquides, visqueux ou susceptibles de s'écouler dans un réservoir (1), notamment pour le traitement du moût en cours de vinification du vin rouge, comportant au moins une conduite d'alimentation (4, 4', 4") reliée à une buse (3, 3') pour un gaz et une installation de commande (15) pour commander l'alimentation discontinue en gaz de la buse (3, 3') installée dans le réservoir (1), la position ou la direction de sortie de la buse (3, 3') étant variable de manière notamment discontinue et d'une façon définie précisément dans le réservoir (1) pendant le fonctionnement, et la buse (3, 3') étant montée à rotation dans le réservoir (1) autour d'un axe de rotation (1a) pour être entraînée par une installation d'entraînement en rotation,
la buse (3, 3') étant une buse à coupelle,
**caractérisé en ce que**
la buse à coupelle comporte une coupelle inférieure et une coupelle supérieure de buse (3a, 3b), les deux coupelles de buse (3a, 3b) étant écartées l'une de l'autre avec
un volume de buse (24b) formé entre les coupelles de buses (3a, 3b).

2. Dispositif (2) selon la revendication 1,
**caractérisé en ce qu'**
au moins une buse (3) et/ou au moins une conduite d'alimentation (4) sont prévues au niveau du fond (6) du réservoir.

3. Dispositif (2) selon la revendication 1 ou 2,
**caractérisé en ce que**
plusieurs buses (3, 3') sont installées à des hauteurs différentes et/ou des distances différentes de l'axe de rotation (1a).

4. Dispositif selon l'une des revendications 1 à 3,
**caractérisé en ce qu'**
au moins une buse (3) comporte au moins une surface de guidage (17) engendrant une rotation.

5. Dispositif selon l'une des revendications 1 à 4,
**caractérisé en ce que**
chaque coupelle de buse (3a, 3b) a la forme d'une calotte sphérique.

6. Dispositif selon l'une des revendications 1 à 5,
**caractérisé en ce que**
l'axe de symétrie (3c) de la buse en forme de coupelle est incliné par rapport à l'axe de rotation (1a).

7. Dispositif (2) selon l'une des revendications 1 à 6,
**caractérisé en ce qu'**
au moins deux buses (3, 3') ou groupes de buses (3, 3') sont commandés séparément l'une de l'autre et de préférence au moins deux parties de buses (3, 3') ou groupes de parties de buses (3, 3') sont reliés hydrauliquement chaque fois par une conduite d'alimentation (4, 4', 4").

8. Dispositif selon la revendication 7,
**caractérisé en ce que**
les conduites d'alimentation (4, 4', 4") d'au moins deux buses (3, 3') sont juxtaposées en parallèle.

9. Dispositif (2) selon la revendication 7,
**caractérisé en ce que**
les conduites d'alimentation (4, 4') d'au moins deux buses (3, 3') sont coaxiales l'une à l'autre et entre deux conduites d'alimentation (4, 4') voisines on a à chaque fois un intervalle annulaire (18) relié d'un côté à une buse (3') et de l'autre à une installation d'alimentation en gaz.

10. Dispositif selon l'une des revendications 7 à 9,
**caractérisé en ce que**
les conduites d'alimentation (4, 4', 4") sont reliées rigidement l'une à l'autre et toutes les conduites d'alimentation sont montées à rotation en commun autour de l'axe de rotation (1a).

11. Dispositif (2) selon la revendication 7 ou 9,
**caractérisé en ce que**
chaque conduite d'alimentation (4, 4', 4") peut être entraînée en rotation en soi et indépendamment par une installation d'entraînement en rotation.

12. Dispositif selon l'une des revendications 1 à 11,
**caractérisé par**
au moins deux conduites d'alimentation (4, 4', 4") ou au moins deux groupes de conduites d'alimentation (4, 4', 4"), chaque conduite d'alimentation (4, 4', 4") ou chaque groupe de conduites d'alimentation (4, 4', 4") étant relié hydrauliquement à une conduite d'alimentation (11) fixe.

13. Dispositif selon la revendication 12,
**caractérisé en ce que**
pour relier hydrauliquement la conduite d'alimentation (11) à au moins une conduite d'alimentation (4, 4', 4"), il est prévu au moins une pièce de liaison (10),
la conduite d'alimentation (11) débouchant de préférence radialement dans la pièce de liaison (10) et au moins la conduite d'alimentation (4, 4', 4") part axialement de la pièce de liaison (10) et
la conduite d'alimentation (4, 4', 4") est montée à rotation par rapport au boîtier (27) de la pièce de liaison (10) et est rendue étanche par un moyen d'étanchéité (28).

14. Dispositif selon la revendication 13,
**caractérisé en ce que**
la pièce de liaison (10) comporte une chambre (29a, 29b, 29c) par conduite d'alimentation (11), et une conduite d'alimentation (4, 4', 4") est issue de chaque chambre,
les chambres (29a, 29b, 29c) de conduites d'alimentation différentes (11a, 11b, 11c) étant séparées par des cloisons (30a, 30b, 30c) essentiellement en forme de disques et/ou étant séparées de manière étanche au gaz.

15. Dispositif selon la revendication 14,
**caractérisé en ce que**
les cloisons (30a, 30b, 30c) sont installées parallèlement et de façon écartée les unes des autres et perpendiculairement à l'axe de rotation (1a) dans le boîtier (27) de la pièce de liaison (10) essentiellement cylindrique creux, avec un moyen d'étanchéité (28) prévu de préférence entre la cloison (30a, 30b, 30c) et le boîtier (27).

16. Dispositif selon la revendication 14 ou 15,
**caractérisé en ce que**
les cloisons (30a, 30b, 30c) sont reliées rigidement à un arbre d'entraînement (26).

17. Dispositif selon l'une des revendications 14 à 16,
**caractérisé en ce que**
l'arbre d'entraînement (26) forme une conduite d'alimentation centrale (4) communiquant avec une chambre (29a), de préférence avec la chambre la plus éloignée des parties de buses (3) par au moins un orifice d'entrée radial (32a).

18. Dispositif selon l'une des revendications 14 à 17,
**caractérisé en ce qu'**
au moins une cloison (30a, 30b) comporte au moins un orifice d'entrée axial (32a, 32b) écarté de l'axe de rotation (1a) pour une conduite d'alimentation (4, 4', 4").

19. Dispositif (2) selon l'une des revendications 1 à 18,
**caractérisé en ce que**
le couvercle (7) du réservoir comporte au moins un orifice de ventilation (20) communiquant avec le côté aspiration d'un générateur de pression de l'installation d'alimentation en gaz (13).

20. Procédé pour mélanger des milieux liquides, pâteux ou susceptibles de s'écouler dans un réservoir (1), notamment pour le traitement du moût au cours de la vinification du vin rouge,
selon lequel on insuffle du gaz en continu dans le milieu par l'intermédiaire d'au moins une buse (3, 3'), et le gaz remontant dans le fluide du fait de la différence de densité, met en circulation le fluide, la position ou la direction de sortie de la buse (3, 3') étant variable d'une manière définie de façon précise dans le réservoir,
la buse (3, 3') tournant de façon discontinue à des intervalles de temps définis, alors que de préférence la rotation de la buse (3, 3') est assurée par la rotation de la conduite d'alimentation (4, 4', 4"),
**caractérisé en ce qu'**
on induit un mouvement de rotation au gaz sortant de la buse (3, 3').

21. Procédé selon la revendication 20,
**caractérisé en ce qu'**
on insuffle le gaz dans le fluide à des niveaux différents et/ou dans des segments de réservoir différents.
